# EUROPEAN PATENT SPECIFICATION

(11) **EP 1 366 672 B1**
(45) Date of publication and mention of the grant of the patent: **27.02.2008**
(21) Application number: 02425340.3
(22) Date of filing: 29.05.2002
(51) Int. Cl.: A23G 1/00

(54) **Food composition based on cocoa admixed with intensive sweeteners and process for preparation of same.**
Nahrungsmittelzusammensetzungen auf der Basis von mit Intensivsüssstoff vermischtem Kakao und deren Herstellungsverfahren
Composition alimentaire à base de cacao avec des édulcorants intensifs et procédé de préparation

(43) Date of publication of application: 03.12.2003
(73) Proprietor: Sugar Company S.p.A. in Forma Abbreviata "S & Co.", 40023 Castel Guelfo di Bologna (BO) (IT)
(72) Inventor: Neri, Napoleone, 40064 Ozzano Emilia (Bologna) (IT)
(74) Representative: Bottero, Carlo

(56) References cited:
- EP-A- 0 489 515
- EP-A- 0 653 169
- WO-A-00/56176
- WO-A-01/10236
- WO-A-98/04156
- WO-A-99/30566
- DE-A- 3 738 042
- US-A- 4 963 382
- US-A- 5 360 621
- US-A- 5 501 865
- US-A- 5 631 240

## Description

The present invention belongs to the food sector and, more particularly, it relates to a food composition containing cocoa admixed with intensive sweeteners. The present invention also pertains to a process for preparation of said composition.

It is known that cocoa is obtained from the seeds of the Theobroma cacao tree the fruits of which hang from the branches and trunk thereof. The fruits may contain a number of cocoa beans as high as 100.

The most valuable cocoa types according to the classification present in Latin America are three in number: "criollo, forastero and trinitario" cocoa.

After the cacao fruits are cropped, they are opened and the pulp is drawn out so that it is allowed to ferment to enable development of fragrances and essential flavours (fermentation step). After fermentation, the beans are separated and naturally dried in the sun on leaves or in driers (drying step). Only the central part or core of the beans is used for cocoa preparation and, for this reason, appropriate machines remove the hard outer husk (husking step). The beans thus cleaned and husked are then heated in a hot air stream (roasting step).

The beans are then reduced to the so-called paste or liquor or cocoa mass (grinding step). At this point the cocoa paste can be submitted to a process in which, by a pressure variation, the cocoa butter is separated from the remaining part, while if temperature is varied, cocoa powder is obtained by drying.

Alternatively, the cocoa paste can be further refined to reduce the particle sizes to 25-30 microns. In this case the obtained cocoa paste (not yet edible) is designed for preparation of different food products containing chocolate (step of pressure-treatment or treatment for refining).

The cocoa paste just as it is, is not edible because it is very bitter, sour and astringent to such an extend that it is very nasty to taste. For this reason the cocoa derivatives are admixed with other ingredients, in different proportions with respect to each other, for preparation of different chocolate types (mixing step). Chocolate in fact is made up of cocoa paste, cocoa, sugar, cocoa butter, possibly powdered milk and other ingredients such as soybean lecithin (an emulsifier of the cocoa butter) or natural and synthetic flavours. The cocoa compound thus obtained is maintained under stirring, at a constant temperature, in particular vats called "conges" (standing and working step in conges). The standing and working step carried out in conges enables humidity to be removed and the undesired volatile products to be eliminated and also allows the paste sourness and viscosity to be reduced. In addition the standing and working step enables dispersion of the solids in the cocoa butter to be reduced and flavour to be developed.

Finally, the chocolate compound can be poured into moulds (pouring step).

Temperature variation in the different process steps enables formation within the product of a lattice consisting of beta-stable crystals of cocoa butter (settling and hardening step). The lattice-like texture allows achievement of an "unpowdery" chocolate in which the cocoa butter does not appear on the surface. Furthermore, the lattice-like texture in the chocolate enables the so-called "click" effect to be achieved when it is broken, which effect is particularly appreciated by estimators.

Finally, the process involves a refining and wrapping step so as to obtain a product to be admitted to the consumer market.

During the standing and working step, to eliminate sourness in the cocoa compound, one or more alkalifying products are added, such as alkaline carbonates, alkaline hydroxides, magnesium carbonate, ammoniacal solutions, magnesium oxide.

As regards refined cocoa butter, also allowed is treatment with an alkaline solution or similar substance commonly employed for neutralization, such as bentonite, activated carbon, decolorizing substances.

Industrial cocoa working is very complicated and also involves use of some semi-finished products, in addition to appropriate additives.

On the market, the difference between the different chocolate types is due to the different mixing of raw materials. Depending on the chocolate types a wide variety of products is created, such as powdered cocoa (at least 20% of cocoa butter), extra dark chocolate (more than 43% of cocoa), very fine or first-class milk chocolate (30% of cocoa and 18% of milk derivatives), sugarless chocolate (sugar is replaced with "mass-sweetening" substances such as polyhydric alcohols).

Nowadays there is a great consumer demand for "sugarless chocolate" because in modern society consumers suffering from diabetic pathologies or overweight problems have increased.

It is known that sugarless chocolate is defined as a chocolate in which saccharose is replaced with other sweetening substances, "mass sweeteners" such as fructose or polyhydric alcohols.

Polyhydric alcohols can be: sorbitol, mannitol, isomalt, lactitol, xylitol. All these compounds are defined as "mass sweeteners".

Patent US 5,360,621 describes a low-calorie chocolate where said polyhydric alcohol mass sweeteners are present in the chocolate at a concentration of 35% to 65% by weight.

A drawback in polyhydric alcohols is that they do not agree with all consumer categories because they cause laxative effects, or a very troublesome intestinal swelling even to reduced amounts.

Polyhydric alcohols are compounds that are digested (metabolized) to about 60% by weight. Consequently, the caloric saving for consumers is only of 40% by weight (corresponding to 40% by weight of undigested polyhydric alcohols). Therefore, identifying a chocolate referred to as "sugarless" as a product that does not contain sugars is not correct. In fact, the caloric content of a "sugarless chocolate" is the same as the caloric content of a chocolate with sugar.

The commonest method of producing "sugarless chocolate" is that of using polyhydric alcohols as saccharose substitutes. Maltitol is one of the sweeteners commonly used by almost all "sugarless chocolate" producers.

Patent EP 0653169 describes a sugarless spread that contains cocoa , where the saccharose substitute is a syrup consisting of sugar alcohols and predominantly maltitol.

The main drawback in using said product is its syrupy state and weak sweetness.

From a recent study it has come out that "sugarless chocolate" is obtained by use of sugar substitutes in the following combinations:
- Maltitol + Fructose
- Lactitol + Glucose + Saccharose
- Fructose + Saccharose + Lactose
- Fructose + Lactose
- Maltitol + Lactose
- Maltitol + Fructose
- Maltitol
- Lactitol + Lactose

With the above listed combinations of "mass sweeteners", attempts have been made to imitate the "soft taste", devoid of after taste, typical of saccharose, so as to harmoniously stimulate the taste buds for a relatively long period of time. Unfortunately the hitherto achieved organoleptic features of the cocoa-based products and sweeteners are not particularly appreciated by consumers.

Another type of sweetener is known in the art: intense sweeteners. DE 3738042; WO 01/10236, WO99/30566, WO00/56176 describe their application in preparation of edible or confectionary goods/preparations. US 5,501,865 describes their use in the production of milk chocolate, where the maximum cocoa content in the chocolate is 10% by weight. US 4,963,382 and WO 98/94156 describe the problem of intensive sweeteners in providing bulk for sugarless or dietetic food compositions and provide alternative solutions to this problem in the art by using different chemical compounds. US 5,631,240 describes the chemical composition and use of a different type of sweetener: it is tasteless and simply masks or eliminates undesirable tastes.

The minimum cocoa content in the different chocolate types both in the traditional (with sugar) type and in the sugarless type is established by an appropriate law.

A recent market research has shown that the maximum cocoa content in a traditional chocolate (with sugar) is about 77% by weight and the maximum cocoa content in a sugarless chocolate is about 80% by weight.

EP 0489515 describes a method, using "mass sweeteners" as sweeteners, whereby a chocolate with a maximum cocoa content (cocoa nib and additional cocoa butter) of 80% by weight is produced.

The cocoa paste contains some substances that are particularly important for the physiological and brain activity of the human body.

It is also known that, in the different steps of the chocolate working process, setting up of degenerative biological processes of the substances may occur that alter contents of same.

Therefore, there is a need for a sugarless product that does not possess the drawbacks of the known art.

In particular, there is a need for a sweetened product containing an amount of cocoa by weight exceeding 80% which has an unchanged chemical composition and an unchanged cocoa taste.

In addition, there is a need for a method of preparing chocolate with a high cocoa content and unchanged in its chemical composition that keeps the cocoa flavour and taste intact so as to promote a wide consumption of chocolate that is "truly" sugarless.

Now, a food composition containing cocoa in combination with a selected mixture of intensive sweeteners has been found that keeps the organoleptic cocoa features unchanged.

It is a first object of the present invention to provide a food composition the features of which are defined in the appended independent claim.

Within the context of the present invention the word "cocoa" is inclusive of the meanings of powdered cocoa, cocoa butter, cocoa paste or a cocoa derivative.

Advantageously, the food composition according to the invention keeps a high content of "nutriceutical" ingredients so as to allow use of the composition for the purpose of promoting concentration powers, winning stress and depression, increasing sensory perceptions, obtaining a gratification and wellness state and at all events enabling its use in all psychophysical-stress situations.

Advantageously, the composition being the object of the present invention has a chemical formulation with a high content of biologically active substances (neurotransducers) and the absence of sugary substances.

It is a further object of the present invention to provide a process for preparation of said food composition the features of which are defined in the appended independent claim.

The process for preparation of the food composition of the present invention comprises at least one standing and working step carried out in conges.

During the standing and working step in conges a particular composition of intensive sweeteners is introduced into the cocoa paste, cocoa butter, powdered cocoa or a cocoa derivative.

Preferably, said composition of intensive sweeteners is liquid.

The composition comprises at least one intensive-sweetening substance selected from the group comprising: Acesulfame K, sodium or potassium cyclamate, Aspartame, Sodium Benzosulfimide (Saccharin), Taumatine, Neosperidine DC, Talin, Halitame, Sucralose and Stevia.

Preferably, the liquid composition comprises at least two sweetening substances selected from the group comprising: Acesulfame K, sodium or potassium cyclamate, Aspartame, Sodium Benzosulfimide (Saccharin), Taumatine, Neosperidine DC, Talin, Halitame, Sucralose and Stevia.

Advantageously, the liquid composition comprises at least three sweetening substances selected from the group comprising: Acesulfame K, sodium or potassium cyclamate, Aspartame, Sodium Benzosulfimide (Saccharin), Taumatine, Neosperidine DC, Talin, Halitame, Sucralose and Stevia.

Advantageously, the intensive sweeteners employed are previously made soluble.

For example, a given amount by weight of powdered sodium cyclamate is solubilized in water. Subsequently, a given amount of powdered potassium acesulfame is added to the solution and the obtained solution is maintained under stirring. Afterwards, a given amount of powdered Sodium Benzosulfimide is added to the solution under stirring to yield a liquid composition of intensive sweeteners. The liquid composition has a pH value between 7 and 8.

The advantage of the admixture consisting of the "intensive sweeteners" results from the synergistic factors developing within the solution.

Added to the liquid composition of intensive sweeteners is a given amount of an alkalinizing substance in solution. Addition of the alkalinizing substance stabilizes the pH in the liquid composition to a value included between 9 and 11; preferably between 9.5 and 10.5.

The alkalinizing substance can be selected from the group comprising sodium carbonate, potassium or sodium hydroxide, ammonium carbonate, calcium carbonate, sodium or potassium lactate.

Preferably, the alkalinizing substance is solubilized in water and subsequently added to the composition of liquid sweeteners.

In a preferred embodiment, the sweetening composition used in the present invention comprises: cyclamate, sodium benzosulfimide and potassium acesulfame.

For example, cyclamate and sodium benzosulfimide are in a ratio by weight included between 1:4 and 4:1, preferably 1:2 and 2:1.

For example, sodium benzosulfimide and potassium acesulfame are in a ratio by weight in the range of 1:5 to 5:1, preferably from 1:2 to 2:1.

Preferably, cyclamate, sodium benzosulfimide and potassium acesulfame are in a ratio of 2:1:0.4.

The food composition comprises the sweeteners in an amount by weight lower than 0.5%; preferably lower than 0.3% of the food composition.

In a preferred embodiment, the sweetening composition comprising Nesperidine and Talin is present in an amount lower than 0.2% by weight, with respect to the weight of the food composition; preferably in an amount less than 0.1% by weight.

The standing and working step is carried out to a temperature in the range of 60 to 80°C, over a time sufficient to obtain the desired humidity, sourness and texture parameters.

The standing and working step has the effect of eliminating the undesired flavours and the humidity excess, reducing or eliminating the bitter taste of cocoa, distributing the cocoa butter in the cocoa paste, distributing the sweetening substances in the cocoa butter and cocoa paste.

In addition, the admixture of intensive sweeteners is adapted to qualitatively improve the cocoa taste and appearance because it unexpectedly promotes formation of beta crystals in cocoa butter.

Furthermore, the sweetening substances, in the form of basic salts, are able to buffer the cocoa mass sourness without resorting to aggressive alkaline agents, during the standing and working step. In fact, use of aggressive alkaline agents can easily alter and/or reduce the content of the physiologically active substances present in cocoa.

For example, the process for preparation of the food composition comprises a step in which the cocoa butter, cocoa paste or cocoa are previously melted to give a melted mass to about 40-50°C.

Subsequently, the melted mass is submitted to a standing and working step.

Practically addition of the previously melted mass takes place in a vessel (conge) provided with heating means and mixing means.

By keeping stirring constant the resulting melted mass is heated to a temperature of 40-50°C to 60-70°C over a period of time varying from 30 to 120 minutes.

Subsequently, an aqueous liquid composition prepared beforehand and comprising the sweetening substances is added.

The aqueous liquid composition has been alkalinized to a pH included between 9 and 11 through addition of an alkaline substance. To the mass under stirring, to 60°C for example, the aqueous liquid composition is added.

The mass under stirring added with the sweetening substances is maintained under stirring over a period of time of 10 to 30 hours, to 60°C for example. This step is important to enable evaporation of the water contained in the aqueous liquid composition, so that the sour volatile substances that otherwise would give the final food composition a bitter and disagreeable taste are allowed to evaporate. In addition, the step of maintaining under stirring at 60°C for 30 hours enables the ingredients to come into close contact with each other causing a maximum dispersion of the sweetening substances (in a saline form). Finally, the step of maintaining under stirring to 60°C for 10-30 hours enables the sweetening substances (in a saline form) to be incorporated into the starches, fibres and fats that are present in cocoa, cocoa butter or cocoa paste.

At the end of the 10-30 hours' period, the mass being worked is poured into the moulds. Subsequently the moulds are cooled (settling and hardening step). The settling and hardening step enables the obtained chocolate to form a crystal lattice. Finally, the obtained chocolate is packaged.

The food composition being the object of the present invention is intended for diabetics because it is devoid of sugary substances.

Furthermore, the food composition addresses to consumers that are in a situation of psychophysical stress because said composition contains cocoa rich in physiologically active substances.

Advantageously, the food composition of the present invention contains a high amount of phenyl ethyl ammine (a molecule that bind itself to the same brain receptors as those of psychostimulant substances such as amphetamines), of anandammide (a natural substance capable of stimulating sensory perceptions and inducing euphoria), of methylxantine (a substance similar to caffeine), of polyphenols and flavonoids (substances having an antioxidant activity), of theobromine (a substance stimulating the heart and nervous system activity), and finally it stimulates production of serotonin ("the mood-influencing hormone")

All these substances have a high physiological value and their efficiency reaches its maximum level if they are taken by a consumer in their original concentration, i.e. cocoa with a 100% purity; said substances may help in:
- easing nervous hunger away;
- avoiding drowsiness states, by increasing clearness of mind;
- supporting people that must concentrate on an artistic activity, by supplying them with energy for the mind and body;
- increasing physical resistance of athletes in their sports activity;
- fighting against fatigue, stress and depressive states,
- promoting motor and brain activities in old people;
- alleviating fatigue in studying and making intellectual activities easier.

For all the above reasons experts in modern food science define the substances contained in cocoa as "nutriceutical" and therefore cocoa is a food product rich in physiologically active substances.

Correlation between the chemical texture of the sweetener and the receptor is very important because a sweetener must have a proton always available in the time gap intervening between the first and last tasting phase.

In intensive sweeteners the donor proton, in order that it may be always available, must be transferred from various sources having different chemical textures, so as to obtain a permanent action on the acceptor system.

Briefly, in the ideal intensive sweetener, donor protons variously combined with each other and free to create a "sweetening sequence" with other sweetening ingredients must be available.

The "sweetening sequence" is obtained by suitably admixing different sweetening active ingredients, the combination of the different sweetenings developing a synergy giving rise to the so-called "full and soft taste".

The "full and soft taste" and the absence of given "after tastes" as well as the "clear sweetness" that does not overlap the taste of the base foods depend on the technical sequence of the bonds and the dosage of the sweetening active ingredients.

The sweetening solution thus obtained has a basic pH which is very important because it enables the cocoa paste to be buffered without resorting to commonly used processes that utilize aggressive alkaline substances.

The advantages resulting from the sweetening solution are:
1. The solution enables a "sweetening sequence" having a "full and soft taste" similar to sugar to be obtained;
2. Since it is a basic solution the cocoa paste can be buffered.

The composition comprising the sweetening substances reproduced in the present invention is not al all bound to its only use for preparation of the described food composition. In fact, the composition comprising the sweetening substances can be advantageously also employed for preparation of other compositions in other industrial sectors.

Some examples embodying the present invention are given hereinafter for the only purpose of better describing the invention.

### EXAMPLE 1

Food composition comprising:
A. Cocoa paste 90.6% by weight; and
B. Cocoa butter 9.0% by weight.
   Total cocoa amount 99.7% by weight of the food composition.
C. Liquid composition of sweeteners comprising: sodium benzosulfimide, sodium cyclamate and potassium acesulfame 0.4% by weight, with respect to the overall food composition.

### EXAMPLE 2

Food composition comprising:
D. Cocoa paste 90.7% by weight; and
E. Cocoa butter 9.0% by weight.
Total cocoa amount 99.6% by weight of the food composition.
Liquid composition of sweeteners comprising: sodium benzosulfimide, sodium cyclamate and potassium acesulfame 0.3% by weight, with respect to the overall food composition.

### EXAMPLE 3

Food composition comprising:
A. Cocoa paste 80.8% by weight;
B. Cocoa butter 10.0% by weight; and
C. Cocoa powder 9.0% by weight.
   Total cocoa amount 99.8% by weight of the food composition.
D. Liquid composition of sweeteners comprising: sodium benzosulfimide, neosperidine and potassium acesulfame 0.2% by weight, with respect to the overall food composition.

### EXAMPLE 4

Food composition comprising:
A. Cocoa paste 84.9% by weight;
B. Cocoa butter 7.0% by weight; and
C. Cocoa powder 8.0% by weight.
   Total cocoa amount 99.9% by weight of the food composition.
D. Liquid composition of sweeteners comprising: talin, sodium benzosulfimide and potassium acesulfame 0.1% by weight, with respect to the overall food composition.

### EXAMPLE 5

### Example of a process for preparation of the food composition

In a vessel (conge) provided with heating means and mixing means an amount of 850 g of cocoa paste is set. Subsequently, the cocoa paste mass, under stirring, is brought to a temperature of 40°C to obtain a melted mass of cocoa paste.

Afterwards, an amount of 146.64 g of cocoa butter is introduced thereinto.

The melted cocoa paste and melted cocoa butter mass are submitted to a working and standing step in a conge.

Under stirring the resulting mass (melted mass of cocoa paste and melted mass of cocoa butter) is heated to a temperature of 40°C to 60°C over a period of time of 30 minutes. Then, an aqueous liquid composition previously prepared and comprising the intensive sweetening substances is added.

For instance, the composition comprising the sweetening substances can be selected from those listed in the preceding Examples 1-4.

The aqueous liquid composition has been alkalinized to a pH 10 by addition of sodium carbonate.

The aqueous liquid composition comprises sodium benzosulfimide, sodium cyclamate and potassium acesulfame.

Added to the mass under stirring to 60°C are 21 g of the 16%-by-weight aqueous liquid composition of solid sweetening substances (16:100=X(g):21(g of sweetening substances); X=0.336% of sweetening substances.

The mass maintained under stirring, added with the sweetening substances is maintained under stirring for 20 hours to 60°C. This step is important to enable evaporation of the water contained in the aqueous liquid composition so that evaporation of the volatile sour substances that otherwise would give the final food composition a bitter and disagreeable taste can occur. In addition, the step of maintaining under stirring for 20 hours at 60°C enables the ingredients to come into close contact with each other giving rise to dispersion of the sweetening substances (in a saline form) to a maximum degree. Finally, the step of maintaining under stirring for 20 hours at 60°C enables the sweetening substances (in a saline form) to be incorporated into the starches, fibres and fats that are present in the cocoa butter and cocoa paste.

At the end of the period of 20 hours the mass being worked is poured into moulds. Subsequently, the moulds are cooled (settling and hardening step). The settling and hardening step enables the obtained chocolate to form a crystal lattice texture. Finally, the obtained chocolate is packaged.

## Claims

1. A food composition containing:
- a first mixture comprising cocoa,
in combination with
- a second mixture of intensive sweeteners selected from the group comprising: Acesulfame K, sodium or potassium Cyclamate, Aspartame, Sodium Benzosulfimide (Saccharin), Taumatine, Neosperidine DC, Talin, Halitame, Sucralose or Stevia,
**characterized in that** the cocoa content of said food composition is at least as high as 98% by weight, with respect to the overall weight of the composition.

2. The food composition according to claim 1, wherein the said first mixture can comprise powdered coca and/or cocoa paste and/or cocoa butter and/or cocoa derivative.

3. The food composition as claimed in claims 1, and 2, wherein said second mixture of intensive sweeteners is in the liquid form.

4. The food composition as claimed in anyone of claims 1-3, comprising at least two of said intensive sweetening substances.

5. The food composition as claimed in anyone of claims 1-4, comprising at least three of said intensive sweetening substances.

6. The food composition as claimed in claim 5, wherein said three intensive sweeteners are: sodium Cyclamate, potassium Acesulfame and Sodium Benzosulfimide.

7. The food composition as claimed in claim 6, wherein said mixture of intensive sweeteners is in liquid form having a pH value between 7 and 8.

8. The food composition as claimed in anyone of the preceding claims, wherein said second mixture is present in an amount less than 0.5% by weight, with respect to the food composition.

9. The food composition as claimed in claim 8, wherein said second mixture is present in an amount less than 0.3% by weight, with respect to the food composition.

10. The food composition as claimed in anyone of the preceding claims, wherein said second mixture is added with an amount of an alkalinizing substance in solution.

11. A process for preparation of a food composition as claimed in one or more of claims 1 to 10, **characterized in that** it comprises a standing and working step in a conge during which, a mixture of intensive sweeteners in solution is added to a mixture comprising cocoa.

12. Use of a food composition as claimed in one or more of claims 1 to 10 for preparing a food product to be used in a diet for people suffering from diabetes.

## Patentansprüche

1. Nahrungsmittelzusammensetzung enthaltend:
- eine erste Mischung umfassend Kakao,
in Kombination mit
- einer zweiten Mischung von Intensivsüßstoffen, die ausgewählt sind aus der Gruppe umfassend: Acesulfam K, Natrium- oder Kalium-Cyclamat, Aspartam, Natrium-Benzosulfimid (Saccharin), Thaumatin, Neohesperidin DC, Talin, Alitam, Sucralose oder Stevia,
**dadurch gekennzeichnet, daß** der Kakaogehalt der benannten Nahrungsmittelzusammensetzung mindestens 98 Gew.-% in Bezug auf dem Gesamtgewicht der Zusammensetzung beträgt.

2. Nahrungsmittelzusammensetzung nach Anspruch 1, worin die benannte erste Mischung Kakaopulver und/oder Kakaomasse und/oder Kakaobutter und/oder ein Kakaoderivat umfassen kann.

3. Nahrungsmittelzusammensetzung nach den Ansprüchen 1 und 2, worin die benannte zweite Mischung von Intensivsüßstoffen in flüssiger Form vorliegt.

4. Nahrungsmittelzusammensetzung nach irgendeinem der Ansprüche 1-3, umfassend mindestens zwei von den benannten Intensivsüßstoffen.

5. Nahrungsmittelzusammensetzung nach irgendeinem der Ansprüche 1-4, umfassend mindestens drei von den benannten Intensivsüßstoffen.

6. Nahrungsmittelzusammensetzung nach Anspruch 5, worin die benannten drei Intensivsüßstoffe NatriumCyclamat, Kalium-Acesulfam und Natrium-Benzosulfimid sind.

7. Nahrungsmittelzusammensetzung nach Anspruch 6, worin die benannte Mischung von Intensivsüßstoffen in flüssiger Form mit einem pH-Wert von 7 bis 8 vorliegt.

8. Nahrungsmittelzusammensetzung nach irgendeinem der vorhergehenden Ansprüche, worin die benannte zweite Mischung in einer Menge unter 0,5 Gew.-% in Bezug auf der Nahrungsmittelzusammensetzung vorliegt.

9. Nahrungsmittelzusammensetzung nach Anspruch 8, worin die benannte zweite Mischung in einer Menge unter 0,3 Gew.-% in Bezug auf der Nahrungsmittelzusammensetzung vorliegt.

10. Nahrungsmittelzusammensetzung nach irgendeinem der vorhergehenden Ansprüche, worin der benannten zweiten Mischung eine gewisse Menge von einem alkalinisierenden Stoff in Lösung zugesetzt wird.

11. Verfahren zur Vorbereitung einer Nahrungsmittelzusammensetzung nach einem oder mehreren der Ansprüche 1 bis 10, **dadurch gekennzeichnet, daß** es eine Konchierschritt umfasst, worin einer Mischung umfassend Kakao eine Mischung von Intensivsüßstoffen in Lösung zugesetzt wird.

12. Verwendung einer Nahrungsmittelzusammensetzung nach einem oder mehreren der Ansprüche 1 bis 10 zur Vorbereitung eines Nahrungsmittels zur Anwendung für die Ernährung von Diabetiker.

## Revendications

1. Composition alimentaire contentant:
- un premier mélange comprenant cacao,
en combinaison avec
- un deuxième mélange d'édulcorants intensifs choisis du groupe comprenant: acésulfame K, cyclamate de sodium ou de potassium, aspartame, benzosulfimide de sodium (saccharine), thaumatine, néohespéridine DC, talin, alitame, sucralose ou stévia,
**caractérisée en ce que** le contenu de cacao de ladite composition alimentaire est au moins de 98% en poids, par rapport au poids total de la composition.

2. Composition alimentaire selon la revendication 1, dans laquelle ledit premier mélange peut comprendre cacao en poudre et/ou pâte de cacao et/ou beurre de cacao et/ou un dérivé de cacao.

3. Composition alimentaire selon les revendications 1, et 2, dans laquelle ledit deuxième mélange d'édulcorants intensifs est en forme liquide.

4. Composition alimentaire selon une quelconque des revendications 1-3, comprenant au moins deux desdits édulcorants intensifs.

5. Composition alimentaire selon une quelconque des revendications 1-4, comprenant au moins trois desdits édulcorants intensifs.

6. Composition alimentaire selon la revendication 5, dans laquelle lesdits trois édulcorants intensifs sont: cyclamate de sodium, acésulfame de potassium et benzosulfimide de sodium.

7. Composition alimentaire selon la revendication 6, dans laquelle ledit mélange d'édulcorants intensifs est en forme liquide avec une valeur de pH comprise entre 7 et 8.

8. Composition alimentaire selon une quelconque des revendications précédentes, dans laquelle ledit deuxième mélange est présent dans une quantité inférieure à 0,5% en poids, par rapport à la composition alimentaire.

9. Composition alimentaire selon la revendication 8, dans laquelle ledit deuxième mélange est présent dans une quantité inférieure à 0,3% en poids, par rapport à la composition alimentaire.

10. Composition alimentaire selon une quelconque des revendications précédentes, dans laquelle audit deuxième mélange est ajoutée une certaine quantité d'une substance alcalinisante en solution.

11. Procédé pour la préparation d'une composition alimentaire selon une ou plusieurs des revendications 1 à 10, **caractérisé en ce que** il comprend une étape de conchage pendant laquelle à un mélange comprenant cacao on ajoute un mélange d'édulcorants intensifs en solution.

12. Utilisation d'une composition alimentaire selon une ou plusieurs des revendications 1 à 10 pour la préparation d'un aliment à employer dans le régime alimentaire de sujets diabétiques.
